# EUROPEAN PATENT APPLICATION

(11) **EP 4 687 251 A1**
(43) Date of publication of application: **04.02.2026**
(21) Application number: 25193158.0
(22) Date of filing: 31.07.2025
(51) Int. Cl.: H02J 3/38, H02J 3/44, H02M 1/36, H02J 3/40, H02J 3/32

(54) **POWER CONVERTER, POWER SUPPLY SYSTEM, AND BLACK START METHOD FOR POWER CONVERTER**

(30) Priority: 31.07.2024 CN 202411048993
(71) Applicant: Huawei Digital Power Technologies Co., Ltd., Shenzhen, Guangdong 518043 (CN)
(72) Inventor: LIANG, Bin, Shenzhen, 518043 (CN); DONG, Mingxuan, Shenzhen, 518043 (CN); XIN, Kai, Shenzhen, 518043 (CN)
(74) Representative: Isarpatent

(57) **Abstract**

Embodiments of this application provide a power converter, a power supply system, and a black start method for the power converter. A direct current end of the power converter is configured to connect to a photovoltaic module or an energy storage battery, and an alternating current end of the power converter is configured to connect to a load or a power grid. The power converter includes a power conversion circuit and a controller. The power conversion circuit is configured to convert a direct current into an alternating current. The controller is configured to: during black start of the power converter, first control a voltage amplitude of the alternating current output by the power conversion circuit to be increased at a first rate, and then control the voltage amplitude of the alternating current output by the power conversion circuit to be increased at a second rate, where the second rate is greater than the first rate.

## Description

### TECHNICAL FIELD

This application relates to the power electronics field, and in particular, to a power converter, a power supply system, and a black start method for the power converter.

### BACKGROUND

Black start means that after an entire power supply system is shut down due to a fault or when the power supply system is started for the first time, without help of a network or a power grid, a unit that has a self-start capability in the system starts up, to drive a unit that does not have the self-start capability to gradually expand a recovery scope of the system, thereby finally recovering the entire system. Black start is widely applied to various power supply systems (such as a micro grid and an off-grid system). In a power supply system in which a plurality of devices such as inverters and power conversion systems are connected in parallel, the inverters and the power conversion systems in the power supply system are usually required to synchronously perform black start, and output voltage amplitudes and phases of all devices need to be consistent during black start. This avoids a large circulating current among devices connected in parallel caused by excessive deviations of the voltage amplitudes and phases established between the plurality of devices. Due to a communication delay in the power supply system, moments at which all the devices receive a black start instruction delivered by a master computer are inconsistent, and different devices have a voltage sampling deviation. Consequently, voltage amplitudes and phases established during black start of the inverters and the power conversion systems are different, resulting in a circulating current among devices connected in parallel. An excessive circulating current among devices connected in parallel between the inverters, between the power conversion systems, or between the inverter and the power conversion system results in shutdown due to a direct current bus overvoltage of the inverters and the power conversion systems, resulting in a black start failure. Therefore, how to implement multi-device parallel connection for synchronous black start without increasing additional hardware costs or changing a communication mode, and suppress the circulating current among devices connected in parallel caused by the communication delay at an initial stage of black start is one of urgent technical problems that need to be resolved currently.

### SUMMARY

Embodiments of this application provide a power converter, a power supply system, and a black start method for the power converter, to implement multi-device parallel connection for synchronous black start in the power supply system, and suppress a circulating current among devices connected in parallel caused by a communication delay at an initial stage of black start, thereby improving reliability of black start of the power supply system.

According to a first aspect, this application provides a power converter. A direct current end of the power converter is configured to connect to a photovoltaic module or an energy storage battery, and an alternating current end of the power converter is connected in parallel to an alternating current end of another power converter, and then is configured to connect to a load or a power grid. The power converter includes a power conversion circuit and a controller. The power conversion circuit is configured to convert a direct current into an alternating current. The controller is configured to: during black start of the power converter, first control a voltage amplitude of the alternating current output by the power conversion circuit to be increased at a first rate, and then control the voltage amplitude of the alternating current output by the power conversion circuit to be increased at a second rate, where the second rate is greater than the first rate, to reduce a circulating current between the power converter and the another power converter.

In this application, controllers of all power converters in the power supply system are configured to: when receiving a black start instruction, control all the power converters to perform black start, and control voltage amplitudes of alternating currents output by corresponding power conversion circuits to be increased; and control, at an initial stage of black start, the voltage amplitudes of the alternating currents to be increased at the first rate, to maintain, when a voltage amplitude difference occurs between alternating current ends of all the power converters due to a reason such as inconsistent moments at which all the power converters receive the black start instruction, a voltage difference between the alternating current ends of the plurality of power converters to be less than a voltage threshold, so as to reduce a circulating current among devices connected in parallel in a black start establishment process of the plurality of power converters; and further control the voltage amplitudes of the alternating currents output by the power conversion circuits to be increased at the second rate, where the second rate is greater than the first rate, so that all the power converters complete black start within a fixed time interval. This implements multi-device parallel connection for synchronous black start without increasing additional hardware costs or changing a communication mode, and suppresses a circulating current among devices connected in parallel caused by a communication delay at the initial stage of black start, thereby improving reliability of black start of the power supply system.

In a possible implementation, a voltage difference between an alternating current end of the power converter and an alternating current end of the another power converter is less than the voltage threshold in the process in which the controller controls the voltage amplitude of the alternating current output by the power conversion circuit to be increased at the first rate. At the initial stage of black start, the voltage amplitude of the alternating current is controlled to be increased at the first rate, to maintain, when the voltage amplitude difference occurs between the alternating current ends of all the power converters due to the reason such as inconsistent moments at which all the power converters receive the black start instruction, the voltage difference between the alternating current ends of the plurality of power converters to be less than the voltage threshold, so as to reduce the circulating current among devices connected in parallel in the black start establishment process of the plurality of power converters.

In a possible implementation, the controller is further configured to control the power converter to complete black start within a fixed time interval. Herein, during black start, an increase rate of the voltage amplitude of the alternating current is controlled to be increased to the second rate, reducing time for each power converter to complete black start.

In a possible implementation, a phase of the alternating current output by the power conversion circuit in the power converter is equal to a phase of an alternating current output by a power conversion circuit in the another power converter. Herein, the phase of the alternating current output by the power conversion circuit is controlled during black start, so that phases of alternating currents output by power conversion circuits in the plurality of power converters are consistent, to ensure that the plurality of power converters synchronously complete black start.

In a possible implementation, the controller is further configured to: first control the voltage amplitude of the alternating current output by the power conversion circuit to be increased to a first fixed voltage at the first rate, and then control the voltage amplitude of the alternating current output by the power conversion circuit to be increased to a startup voltage of the power converter at the second rate, to complete black start of the power converter. In this way, time for each power converter to complete black start is not excessively long.

In a possible implementation, the controller is further configured to: when the voltage amplitude of the alternating current output by the power conversion circuit is less than a second fixed voltage, control a current amplitude of the alternating current output by the power conversion circuit not to exceed a current threshold, where the second fixed voltage is greater than the first fixed voltage. Herein, before the second fixed voltage is reached, the current amplitude of the alternating current output by the power conversion circuit is controlled not to exceed the current threshold, so that a circulating current among devices connected in parallel caused by a voltage sampling deviation of each power converter can be suppressed, and the circulating current among devices connected in parallel caused by the communication delay at the initial stage of black start can be further suppressed.

In a possible implementation, the controller is further configured to: after controlling the voltage amplitude of the alternating current output by the power conversion circuit to be increased at the second rate, control an increase rate of the voltage amplitude of the alternating current to continue to be increased for one or more times, until the voltage amplitude of the alternating current output by the power conversion circuit reaches a startup voltage of the power converter, to complete black start of the power converter. After the increase rate of the voltage amplitude of the alternating current is controlled, during black start, to be increased to the second rate, the increase rate of the voltage amplitude of the alternating current is controlled to continue to be increased for one or more times, reducing time for each power converter to complete black start.

According to a second aspect, this application provides a power supply system. The power supply system includes an upper-level controller and a plurality of power converters, a direct current end of the power converter is configured to connect to a photovoltaic module or an energy storage battery, alternating current ends of the plurality of power converters are connected in parallel and then are configured to connect to a load or a power grid, the power converter includes a power conversion circuit and a controller, the power conversion circuit is configured to convert a direct current into an alternating current, and the upper-level controller is configured to send a black start instruction to the plurality of power converters. The controller is configured to: during black start of the power converter, first control a voltage amplitude of the alternating current output by the power conversion circuit to be increased at a first rate, and then control the voltage amplitude of the alternating current output by the power conversion circuit to be increased at a second rate, where the second rate is greater than the first rate, to reduce a circulating current between the plurality of power converters.

In this application, controllers of all power converters in the power supply system are configured to: when receiving the black start instruction, control the power converters to perform black start, that is, control voltage amplitudes of alternating currents output by corresponding power conversion circuits to be increased, and control, at an initial stage of black start, the voltage amplitudes of the alternating currents to be increased at the first rate, to maintain, when a voltage amplitude difference occurs between alternating current ends of all the power converters due to a reason such as inconsistent moments at which all the power converters receive the black start instruction, a voltage difference between the alternating current ends of the plurality of power converters to be less than a voltage threshold, so as to reduce a circulating current among devices connected in parallel in a black start establishment process of the plurality of power converters, and further control the voltage amplitudes of the alternating currents output by the power conversion circuits to be increased at the second rate, where the second rate is greater than the first rate, so that all the power converters complete black start within a fixed time interval. This implements multi-device parallel connection for synchronous black start without increasing additional hardware costs or changing a communication mode, and suppresses a circulating current among devices connected in parallel caused by a communication delay at the initial stage of black start, thereby improving reliability of black start of the power supply system.

In a possible implementation, a voltage difference between the alternating current ends of the plurality of power converters is less than a voltage threshold in the process in which the controller controls the voltage amplitude of the alternating current output by the power conversion circuit to be increased at the first rate. At the initial stage of black start, the voltage amplitude of the alternating current is controlled to be increased at the first rate, to maintain, when the voltage amplitude difference occurs between the alternating current ends of all the power converters due to the reason such as inconsistent moments at which all the power converters receive the black start instruction, the voltage difference between the alternating current ends of the plurality of power converters to be less than the voltage threshold, so as to reduce the circulating current among devices connected in parallel in the black start establishment process of the plurality of power converters.

In a possible implementation, the controller is further configured to control the power converter to complete black start within a fixed time interval. Herein, during black start, an increase rate of the voltage amplitude of the alternating current is controlled to be increased to the second rate, reducing time for each power converter to complete black start.

In a possible implementation, phases of alternating currents output by the power conversion circuits in the plurality of power converters are equal in the process in which the voltage amplitude of the alternating current output by the power conversion circuit is increased at the first rate. Herein, the phase of the alternating current output by the power conversion circuit is controlled during black start, so that phases of alternating currents output by power conversion circuits in the plurality of power converters are consistent, to ensure that the plurality of power converters synchronously complete black start.

In a possible implementation, the controller is further configured to: first control the voltage amplitude of the alternating current output by the power conversion circuit to be increased to a first fixed voltage at the first rate, and then control the voltage amplitude of the alternating current output by the power conversion circuit to be increased to a startup voltage of the power converter at the second rate, to complete black start of the power converter. In this way, time for each power converter to complete black start is not excessively long.

In a possible implementation, the controller is further configured to: when the voltage amplitude of the alternating current output by the power conversion circuit is less than a second fixed voltage, control a current amplitude of the alternating current output by the power conversion circuit not to exceed a current threshold, where the second fixed voltage is greater than the first fixed voltage. Herein, before the second fixed voltage is reached, the current amplitude of the alternating current output by the power conversion circuit is controlled not to exceed the current threshold, so that a circulating current among devices connected in parallel caused by a voltage sampling deviation of each power converter can be suppressed, and the circulating current among devices connected in parallel caused by the communication delay at the initial stage of black start can be further suppressed.

In a possible implementation, a current threshold is positively correlated with power output by the plurality of power converters to the load. Herein, when duration of the fixed time interval of each power converter is shorter, the first rate is set to be greater, to control, within the fixed time interval, the voltage amplitude of the alternating current output by the power conversion circuit to reach the startup voltage of the power converter, so as to avoid excessively long black start time of the power converter.

In a possible implementation, the controller is further configured to: after controlling the voltage amplitude of the alternating current output by the power conversion circuit to be increased at the second rate, control an increase rate of the voltage amplitude of the alternating current to continue to be increased for one or more times, until the voltage amplitude of the alternating current output by the power conversion circuit reaches a startup voltage of the power converter, to complete black start of the power converter. After the increase rate of the voltage amplitude of the alternating current is controlled, during black start, to be increased to the second rate, the increase rate of the voltage amplitude of the alternating current is controlled to continue to be increased for one or more times, reducing time for each power converter to complete black start.

According to a third aspect, this application provides a black start method for a power converter. The method includes: during black start of the power converter, first controlling a voltage amplitude of an alternating current output by a power conversion circuit in the power converter to be increased at a first rate, and then controlling the voltage amplitude of the alternating current output by the power conversion circuit to be increased at a second rate, where the second rate is greater than the first rate, to reduce a circulating current between the power converter and another power converter. A direct current end of the power converter is configured to connect to a photovoltaic module or an energy storage battery, and an alternating current end of the power converter is connected in parallel to an alternating current end of another power converter, and then is configured to connect to a load or a power grid.

In this application, at an initial stage of black start, the voltage amplitude of the alternating current is controlled to be increased at the first rate, to maintain, when a voltage amplitude difference occurs between the alternating current end of the power converter and another device due to a reason such as inconsistent moments at which all power converters receive a black start instruction, a voltage difference between the alternating current end of the power converter and the another device to be less than a voltage threshold, so as to reduce a circulating current among devices connected in parallel in a black start establishment process of the power converter. In addition, after the voltage amplitude of the alternating current output by the power conversion circuit is increased to be greater than or equal to a first fixed voltage, that is, at a later stage of black start, an increase rate of the voltage amplitude of the alternating current is increased, so that the power converter completes black start within a fixed time interval. This implements multi-device parallel connection for synchronous black start without increasing additional hardware costs or changing a communication mode, and suppresses a circulating current among devices connected in parallel caused by a communication delay at the initial stage of black start, thereby improving reliability of black start of a power supply system.

In a possible implementation, a voltage difference between an alternating current end of the power converter and an alternating current end of the another power converter is less than the voltage threshold in the process in which the controller controls the voltage amplitude of the alternating current output by the power conversion circuit to be increased at the first rate. At the initial stage of black start, the voltage amplitude of the alternating current is controlled to be increased at the first rate, to maintain, when the voltage amplitude difference occurs between the alternating current ends of all the power converters due to the reason such as inconsistent moments at which all the power converters receive the black start instruction, the voltage difference between the alternating current ends of the plurality of power converters to be less than the voltage threshold, so as to reduce the circulating current among devices connected in parallel in the black start establishment process of the plurality of power converters.

In a possible implementation, the method includes: controlling the power converter to complete black start within the fixed time interval. Herein, during black start, the increase rate of the voltage amplitude of the alternating current is controlled to be increased to the second rate, reducing time for each power converter to complete black start.

In a possible implementation, a phase of the alternating current output by the power conversion circuit in the power converter is equal to a phase of an alternating current output by a power conversion circuit in the another power converter. Herein, the phase of the alternating current output by the power conversion circuit is controlled during black start, so that phases of alternating currents output by power conversion circuits in the plurality of power converters are consistent, to ensure that the plurality of power converters synchronously complete black start.

In a possible implementation, the method includes: first controlling the voltage amplitude of the alternating current output by the power conversion circuit to be increased to a first fixed voltage at the first rate, and then controlling the voltage amplitude of the alternating current output by the power conversion circuit to be increased to a startup voltage of the power converter at the second rate, to complete black start of the power converter. In this way, time for each power converter to complete black start is not excessively long.

In a possible implementation, the method includes: when the voltage amplitude of the alternating current output by the power conversion circuit is less than a second fixed voltage, controlling a current amplitude of the alternating current output by the power conversion circuit not to exceed a current threshold, where the second fixed voltage is greater than the first fixed voltage. Herein, before the second fixed voltage is reached, the current amplitude of the alternating current output by the power conversion circuit is controlled not to exceed the current threshold, so that a circulating current among devices connected in parallel caused by a voltage sampling deviation of each power converter can be suppressed, and the circulating current among devices connected in parallel caused by the communication delay at the initial stage of black start can be further suppressed.

### BRIEF DESCRIPTION OF DRAWINGS

FIG. 1 is a diagram of an application scenario of a power supply system according to this application;
FIG. 2 is a diagram of another application scenario of a power supply system according to this application;
FIG. 3 is a diagram of another application scenario of a power supply system according to this application;
FIG. 4 is a diagram of black start control of a power converter according to this application;
FIG. 5 is a diagram of other black start control of a power converter according to this application;
FIG. 6 is a diagram of a structure of a power supply system according to this application; and
FIG. 7 is a schematic flowchart of a black start method for a power converter according to this application.

### DESCRIPTION OF EMBODIMENTS

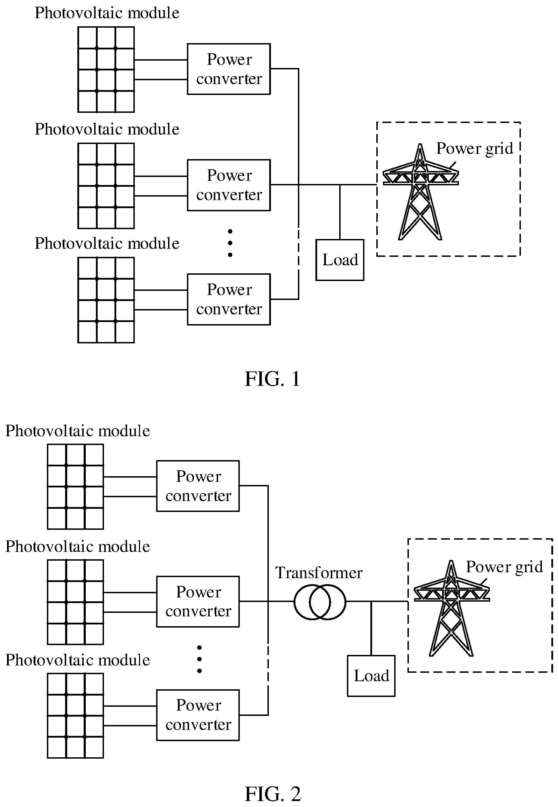

FIG. 1 is a diagram of an application scenario of a power supply system according to this application. The power supply system provided in this application includes a plurality of power converters. A direct current end of each power converter is configured to connect to a photovoltaic module. Alternating current ends of the plurality of power converters are connected in parallel, and then are configured to connect to a load or a power grid through a parallel connection point. Each power converter may perform inversion on the direct current provided by the photovoltaic module, and output an alternating current obtained through inversion to the load or the power grid for power supply. The load may be an alternating current power-consuming device like a household device or a communication base station.

In some feasible implementations, the power supply system may include a transformer. FIG. 2 is a diagram of another application scenario of the power supply system according to this application. An output end of each power converter may be connected to the load through transformer. The transformer may change (may boost, a buck, or the like) the alternating current provided by the power converter, and supply an alternating current obtained through voltage transformation to the load or the power grid for power supply.

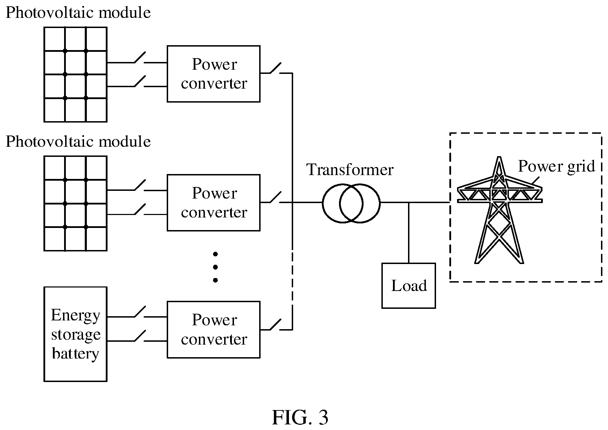

In some feasible implementations, the direct current end of each power converter may be configured to connect to an energy storage battery. FIG. 3 is a diagram of another application scenario of the power supply system according to this application. In the plurality of power converters in the power supply system, direct current ends of some power converters are configured to connect to the energy storage battery. The alternating current ends of the plurality of power converters are connected in parallel, and then are configured to connect to the load or the power grid through the parallel connection point. Each power converter may perform inversion on the direct current provided by the photovoltaic module or the energy storage battery, and output the alternating current obtained through inversion to the load or the power grid for power supply. Herein, the power converter connected to the photovoltaic module in the power supply system may be an inverter, and the power converter connected to the energy storage battery in the power supply system may be a power conversion system.

In the application scenarios of the power supply system shown in FIG. 1 to FIG. 3, after the entire power supply system is shut down due to a fault or another working condition, each power converter in the power supply system needs to perform black start. Alternatively, in the application scenarios of the power supply system shown in FIG. 2 and FIG. 3, each power converter in the power supply system is disconnected from the transformer at night to achieve energy saving effect, and after being illuminated in the daytime, all power converters need to perform synchronous black start to drive the transformer to operate, so as to avoid an excessive excitation inrush current caused by direct energization of the transformer. However, in the foregoing implementation process, due to a communication delay in the power supply system, moments at which all the power converters receive a black start instruction may be inconsistent, and different power converters have a voltage sampling deviation. Consequently, voltage amplitudes and phases established during black start of all the power converters are different, resulting in a circulating current among devices connected in parallel. An excessively large circulating current among devices connected in parallel between the power converters results in shutdown due to a direct current bus overvoltage of the power converters, resulting in a black start failure of the power supply system.

In the power supply system provided in this application, the power supply system includes an upper-level controller and the plurality of power converters. Each power converter includes a power conversion circuit and a controller. The power conversion circuit is configured to convert a direct current into an alternating current. The upper-level controller is configured to send the black start instruction to the plurality of power converters. The controller of each power converter is configured to: when receiving the black start instruction, control the power converter to perform black start. The controller is further configured to: during black start of the power converter, first control a voltage amplitude of the alternating current output by the power conversion circuit to be increased at a first rate, and then control the voltage amplitude of the alternating current output by the power conversion circuit to be increased to a startup voltage of the power converter at a second rate, to complete black start of the power converter, where the second rate is greater than the first rate, to reduce a circulating current between the plurality of power converters. Herein, after receiving the black start instruction, controllers of all power converters in the power supply system control all the power converters to perform black start, control voltage amplitudes of alternating currents output by corresponding power conversion circuits to be increased, and control, at an initial stage of black start, the voltage amplitudes of the alternating currents to be increased at the first rate, to maintain, when a voltage amplitude difference occurs between alternating current ends of all the power converters due to a reason such as inconsistent moments at which all the power converters receive the black start instruction, a voltage difference between the alternating current ends of the plurality of power converters to be less than a voltage threshold, so as to reduce a circulating current among devices connected in parallel in a black start establishment process of the plurality of power converters; and further control the voltage amplitudes of the alternating currents output by the power conversion circuits to be increased at the second rate, where the second rate is greater than the first rate, so that all the power converters complete black start within a fixed time interval. This implements multi-device parallel connection for synchronous black start without increasing additional hardware costs or changing a communication mode, and suppresses a circulating current among devices connected in parallel caused by a communication delay at the initial stage of black start, thereby improving reliability of black start of the power supply system.

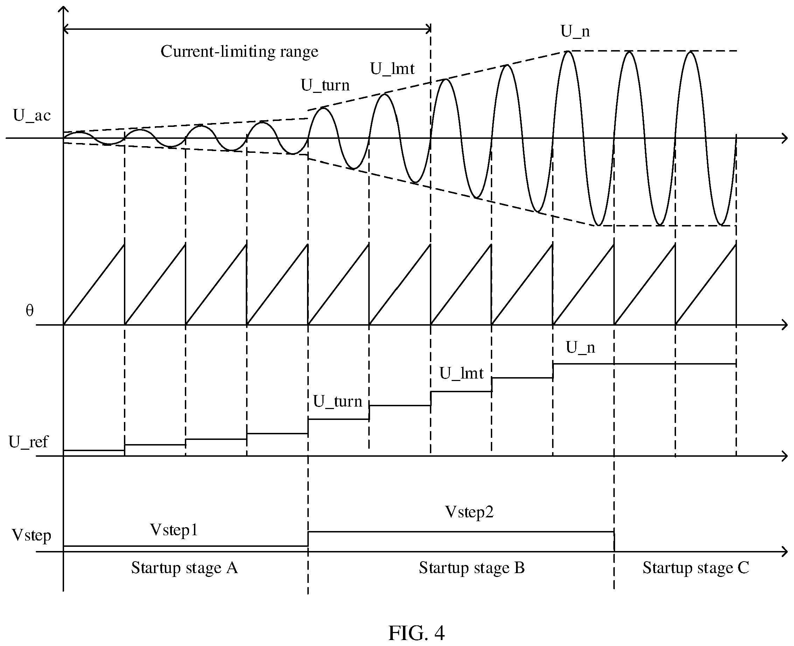

During synchronous black start of all power converters in the power supply system, the controller of the power converter obtains the voltage amplitude of the alternating current output by the power conversion circuit and a voltage of a parallel connection point; and when the voltage amplitude of the alternating current output by the power conversion circuit is less than a first fixed voltage, the controller controls the voltage amplitude of the alternating current output by the power conversion circuit to be increased at the first rate, and controls a phase of the output alternating current to be equal to a phase of the voltage of the parallel connection point. When the voltage amplitude of the alternating current output by the power conversion circuit is increased to the first fixed voltage, an increase rate of the voltage amplitude of the alternating current output by the power conversion circuit is increased for one or more times, and the voltage amplitude of the alternating current output by the power conversion circuit is controlled to be increased at an updated increase rate, until black start of the power converter is completed. FIG. 4 is a diagram of black start control of a power converter according to this application. As shown in FIG. 4, during synchronous black start of the power converters, at a startup stage A, when the voltage amplitude U_ac of the alternating current output by the power conversion circuit is less than the first fixed voltage U_turn, the voltage amplitude of the alternating current output by the power conversion circuit is controlled to be increased at the first rate. Specifically, a voltage amplitude by which the alternating current output by the power conversion circuit is increased after each voltage period may be controlled to be equal to a first step Vstep1, that is, a reference voltage U_ref is increased at the first step Vstep1, so that a voltage amplitude by which a voltage amplitude U_ac of the alternating current output by the power conversion circuit is increased after each voltage period is equal to the first step Vstep1, and a phase θ of the alternating current output by the power conversion circuit is equal to the phase of the voltage at the parallel connection point. At the initial stage of black start, the voltage amplitude of the alternating current is controlled to be increased at the smaller first step Vstep1, to maintain, when the voltage amplitude difference occurs between the alternating current ends of all the power converters due to the reason such as inconsistent moments at which all the power converters receive the black start instruction, the voltage difference between the alternating current ends of the plurality of power converters to be less than the voltage threshold, so as to reduce the circulating current among devices connected in parallel in the black start establishment process of the plurality of power converters. At a startup stage B, when the voltage amplitude U_ac of the alternating current output by the power conversion circuit is equal to the first fixed voltage U_turn, the voltage amplitude of the alternating current output by the power conversion circuit is controlled to be increased at the second rate, where the second rate is greater than the first rate. Specifically, a voltage amplitude by which the alternating current output by the power conversion circuit is increased after each voltage period may be controlled to be equal to a second step Vstep2, that is, the reference voltage U_ref is increased at the second step Vstep2, so that a voltage amplitude by which the voltage amplitude U_ac of the alternating current output by the power conversion circuit is increased after each voltage period is equal to the second step Vstep2. Because the second step Vstep2 corresponding to the startup stage B is greater than the first step Vstep1 corresponding to the startup stage A, the increase amplitude of the voltage amplitude of the alternating current output by the power conversion circuit at the startup stage B is controlled to be greater than the increase amplitude at the startup stage A. At a startup stage C, black start is completed, the alternating current output by the power conversion circuit is controlled to remain unchanged, and the voltage amplitude U_ac of the alternating current output by the power conversion circuit is maintained as the startup voltage U_n of the power converter. Herein, after the voltage amplitude of the alternating current output by the power conversion circuit is increased to be greater than or equal to the first fixed voltage U_turn, that is, at a later stage of black start, the voltage amplitude of the alternating current output by the power conversion circuit is controlled to be increased at the second rate, so that time for the power converter to complete black start is not excessively long. This implements multi-device parallel connection for synchronous black start without increasing additional hardware costs or changing a communication mode, and suppresses a circulating current among devices connected in parallel caused by a communication delay at the initial stage of black start, thereby improving reliability of black start of the power supply system.

The power supply system includes the upper-level controller, and the power supply system further includes a direct current circuit breaker and an alternating current circuit breaker. The power supply system shown in FIG. 3 is used as an example. Refer to FIG. 3 again. The direct current end of each power converter in FIG. 3 is configured to connect to the photovoltaic module or the energy storage battery through the direct current circuit breaker, and the alternating current end of each power converter is configured to connect to the transformer through the alternating current circuit breaker. The upper-level controller delivers the black start instruction to each power converter in a mode like generic object oriented substation event (GOOSE) broadcast or power line carrier (PLC) communication, so that all power converters in a subarray turn on direct current circuit breakers and alternating current circuit breakers that are connected to the power converters, and the power converters start up to enter the black start process. During synchronous black start of all power converters in the power supply system, the controller of the power converter obtains the voltage amplitude of the alternating current output by the power conversion circuit, where the voltage amplitude of the alternating current may be a voltage amplitude of an alternating current obtained by detecting a voltage at two ends of an alternating current output capacitor in the power conversion circuit and filtering out high-frequency component interference in the voltage through a low-pass filter. Then the controller compares the obtained voltage amplitude of the alternating current with the first fixed voltage. When the voltage amplitude of the alternating current is less than the first fixed voltage, black start is performed at the smaller first rate. When the voltage amplitude of the alternating current is greater than or equal to the first fixed voltage, the first rate is increased, and black start is performed at the larger second rate. For example, when the voltage amplitude of the alternating current is less than the first fixed voltage, black start may be performed at the smaller step. When the voltage amplitude of the alternating current is greater than or equal to the first fixed voltage, the step is increased, and black start is performed at the larger step. The controller generates the reference voltage based on a determined step by using black start voltage soft-start logic, and the generated reference voltage passes through a primary voltage regulation loop and a secondary voltage regulation loop of a virtual synchronous generator, to generate an output voltage of the virtual synchronous generator. The output voltage of the virtual synchronous generator is used as the reference voltage of the alternating current output by the power conversion circuit for voltage loop regulation. Finally, a voltage loop output is used as an alternating current loop input, a duty cycle of pulse width modulation is output through current loop regulation, and a drive unit performs drive control on a switching transistor in the power conversion circuit based on the duty cycle of pulse width modulation, so that the voltage amplitude of the alternating current output by the power conversion circuit is increased with an increase of the reference voltage.

Optionally, the first fixed voltage may be equal to a half of the startup voltage of the power converter or a voltage within a value range corresponding to the half of the startup voltage, and the startup voltage of the power converter is a voltage output by the alternating current end after black start of the power converter is completed. For example, when the startup voltage of each power converter is 220 V, the first fixed voltage is set to 110 V. In this case, during synchronous black start of all power converters, when the voltage amplitude of the alternating current output by the power conversion circuit is less than 110 V, the controller of the power converter controls the voltage amplitude of the alternating current output by the power conversion circuit to be increased at the first rate; or when the voltage amplitude of the alternating current output by the power conversion circuit is greater than or equal to 110 V, the increase rate of the voltage amplitude of the alternating current output by the power conversion circuit is increased for one or more times, and the voltage amplitude of the alternating current output by the power conversion circuit is controlled to be increased at an updated increase rate, until the voltage amplitude of the alternating current output by the power conversion circuit reaches the startup voltage 220 V of the power converter, that is, black start of the power converter is completed. It may be understood that, when the startup voltage of the power converter is 220 V, the first fixed voltage may be alternatively set to any voltage within a value range corresponding to 110 V, for example, a value range from 105 V to 115 V. This may be specifically determined based on an actual application scenario, and is not limited herein. Herein, the first fixed voltage may be set to be equal to the half of the startup voltage of the power converter or the voltage within the value range corresponding to the half of the startup voltage of the power converter, so that the voltage amplitude of the alternating current output by the power conversion circuit in each power converter is increased at the lower first rate before reaching the half of the startup voltage of the power converter. This achieves better control effect on the circulating current among devices connected in parallel in a half black start process, and avoids excessively long black start time caused by increasing the voltage at the lower first rate for a long time, thereby ensuring operating efficiency of the power converter.

During synchronous black start of all power converters in the power supply system, because the power converters have the voltage sampling deviation, whether the voltage amplitudes of the alternating currents output by the power conversion circuits reach the first fixed voltage is determined in different manners. Consequently, the voltage difference is generated near the first fixed voltage at which the step changes, resulting in a risk of a large circulating current among devices connected in parallel. The controller is further configured to: when the voltage amplitude of the alternating current output by the corresponding power conversion circuit is less than a second fixed voltage, control a current amplitude of the alternating current output by the power conversion circuit not to exceed a current threshold, where the second fixed voltage is greater than the first fixed voltage and less than the startup voltage of the power converter. Refer to FIG. 4 again. A range within which the voltage amplitude of the alternating current output by the power conversion circuit is less than the second fixed voltage U_1mt is a current-limiting range. The controller may control, in the current-limiting range, the current amplitude of the alternating current output by the power conversion circuit not to exceed the current threshold. The current threshold may be K*IN, where K is a current-limiting ratio, and IN is a rated current. For example, the current threshold may be 5% IN. Herein, before the second fixed voltage is reached, the current amplitude of the alternating current output by the power conversion circuit is controlled not to exceed the current threshold, so that a circulating current among devices connected in parallel caused by a voltage sampling deviation of each power converter can be suppressed, and the circulating current among devices connected in parallel caused by the communication delay at the initial stage of black start can be further suppressed. Optionally, a current threshold is positively correlated with power output by the plurality of power converters to the load. To be specific, when the plurality of power converters in the power supply system are connected to more loads and output higher power to the loads, a larger current threshold is set, to meet a requirement of higher load power.

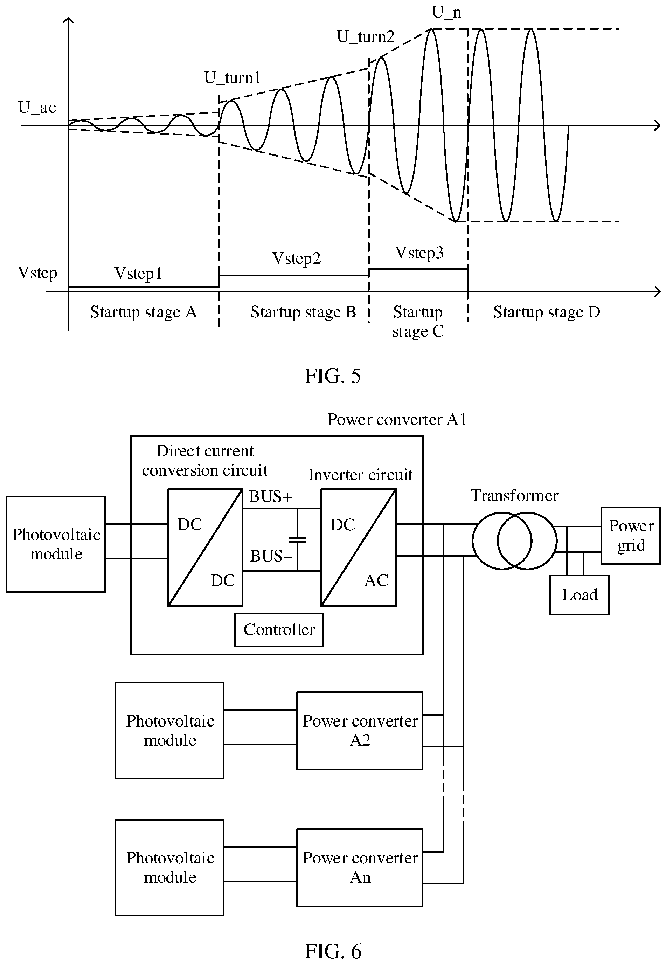

After the voltage amplitude of the alternating current output by the power conversion circuit is controlled to be increased at the second rate, and before black start is completed, the increase rate of the voltage amplitude of the alternating current is controlled to continue to be increased for one or more times, until black start of the power converter is completed. FIG. 5 is a diagram of other black start control of a power converter according to this application. As shown in FIG. 5, at a startup stage A, when the voltage amplitude U_ac of the alternating current output by the power conversion circuit is less than the first fixed voltage U_turn, the voltage amplitude of the alternating current output by the power conversion circuit is controlled to be increased at the first rate. Specifically, a voltage amplitude by which the voltage amplitude U_ac of the alternating current output by the power conversion circuit is increased after each voltage period may be controlled to be equal to the first step Vstep1. At the initial stage of black start, the voltage amplitude of the alternating current is controlled to be increased at the smaller first step Vstep1, to maintain, when the voltage amplitude difference occurs between the alternating current ends of all the power converters due to the reason such as inconsistent moments at which all the power converters receive the black start instruction, the voltage difference between the alternating current ends of the plurality of power converters to be less than the voltage threshold, so as to reduce the circulating current among devices connected in parallel in the black start establishment process of the plurality of power converters. At a startup stage B, when the voltage amplitude U_ac of the alternating current output by the power conversion circuit is equal to the first fixed voltage U_turn1, the voltage amplitude of the alternating current output by the power conversion circuit is controlled to be increased at the second rate, where the second rate is greater than the first rate. Specifically, a voltage amplitude by which the voltage amplitude U_ac of the alternating current output by the power conversion circuit is increased after each voltage period may be controlled to be equal to a second step Vstep2. At a startup stage C, when the voltage amplitude U_ac of the alternating current output by the power conversion circuit is equal to a third fixed voltage U_turn2, the voltage amplitude of the alternating current output by the power conversion circuit is further controlled to be increased at a third rate, where the third rate is greater than the second rate. Specifically, the second step Vstep2 may be increased to Vstep3, and the voltage amplitude by which the voltage amplitude U_ac is increased after each voltage period is equal to the third step Vstep3. Because the second step Vstep2 corresponding to the startup stage B is greater than the first step Vstep1 corresponding to the startup stage A, the increase amplitude of the voltage amplitude of the alternating current output by the power conversion circuit at the startup stage B is controlled to be greater than the increase amplitude at the startup stage A. Because the third step Vstep3 corresponding to the startup stage C is greater than the second step Vstep2 corresponding to the startup stage B, the increase amplitude of the voltage amplitude of the alternating current output by the power conversion circuit at the startup stage C is controlled to be greater than the increase amplitude at the startup stage A and the increase amplitude at the startup stage B. At a startup stage D, black start is completed, the alternating current output by the power conversion circuit is controlled to remain unchanged, and the voltage amplitude U_ac of the alternating current output by the power conversion circuit is maintained as the startup voltage U_n of the power converter. Herein, after the voltage amplitude of the alternating current output by the power conversion circuit is increased to be greater than or equal to the first fixed voltage U_turn, that is, at the later stage of black start, the first rate is sequentially controlled to be increased to the second rate and the third rate, reducing time for each power converter to complete black start. This implements multi-device parallel connection for synchronous black start without increasing additional hardware costs or changing a communication mode, and suppresses the circulating current among devices connected in parallel caused by the communication delay at the initial stage of black start, thereby improving reliability of black start of the power supply system.

A power conversion circuit includes a direct current conversion circuit and an inverter circuit, one end of the direct current conversion circuit is configured to connect to a photovoltaic module or an energy storage battery, the other end of the direct current conversion circuit is configured to connect to one end of the inverter circuit through a direct current bus, and the other end of the inverter circuit is configured to connect to a load or a power grid through a parallel connection point. FIG. 6 is a diagram of a structure of a power supply system according to this application. The power supply system shown in FIG. 6 includes a plurality of power converters: a power converter A1, a power converter A2, ..., and a power converter An. A direct current end of each power converter is configured to connect to a photovoltaic module, and alternating current ends of the plurality of power converters are connected in parallel, and then are configured to connect to the load or the power grid through the parallel connection point. The power conversion circuit includes the direct current conversion circuit and the inverter circuit. For example, the power converter A1 includes a direct current conversion circuit and an inverter circuit, one end of the direct current conversion circuit is configured to connect to a photovoltaic module, the other end of the direct current conversion circuit is configured to connect to one end of the inverter circuit through a positive direct current bus BUS+ and a negative direct current bus BUS-, and the other end of the inverter circuit is configured to connect to the load or the power grid through the parallel connection point. The direct current conversion circuit is configured to perform voltage transformation on a direct current from the photovoltaic module, and output a direct current obtained through voltage transformation to the inverter circuit. The direct current conversion circuit may be a buck circuit, a buck-boost circuit, or the like. A controller of the power converter A1 is configured to: when receiving a black start instruction, control a switching transistor in the inverter circuit to act, so that a voltage amplitude of an alternating current output by the inverter circuit is increased at a first rate; and control a phase of the output alternating current to be equal to a phase of a voltage of a parallel connection point. When the voltage amplitude of the alternating current output by the power conversion circuit is increased to the first fixed voltage, an increase rate of the voltage amplitude of the alternating current output by the power conversion circuit is increased for one or more times, and the voltage amplitude of the alternating current output by the power conversion circuit is controlled to be increased at an updated increase rate, until black start of the power converter is completed.

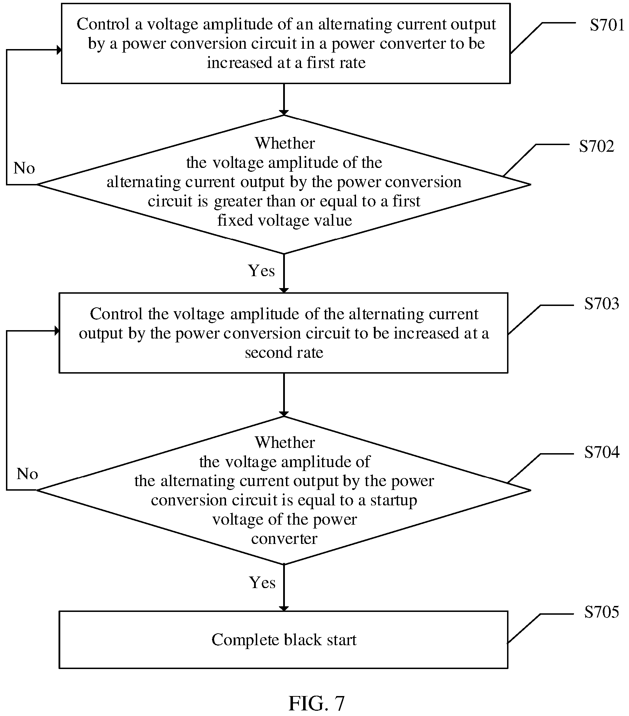

FIG. 7 is a schematic flowchart of a black start method for a power converter according to this application. The black start method for the power converter provided in this application is applicable to the power converter in any power supply system shown in FIG. 1 to FIG. 3. As shown in FIG. 7, the black start method for the power converter provided in this application includes the following steps.

S701: Control a voltage amplitude of an alternating current output by a power conversion circuit in the power converter to be increased at a first rate.

S702: Determine whether the voltage amplitude of the alternating current output by the power conversion circuit is greater than or equal to a first fixed voltage; and if the voltage amplitude is greater than or equal to the first fixed voltage, perform step S703, or if the voltage amplitude is not greater than or equal to the first fixed voltage, perform step S701.

S703: Control the voltage amplitude of the alternating current output by the power conversion circuit to be increased at a second rate.

In some feasible implementations, a direct current end of the power converter is configured to connect to a photovoltaic module or an energy storage battery, and an alternating current end of the power converter is connected in parallel to an alternating current end of another power converter, and then is configured to connect to a load or a power grid through a parallel connection point. After a black start instruction is received, the voltage amplitude of the alternating current output by the power conversion circuit is controlled to be increased at the first rate. Specifically, a voltage amplitude by which the alternating current output by the power conversion circuit is increased after each voltage period may be controlled to be equal to a first step, and a phase of the output alternating current may be controlled to be equal to a target phase, for example, a phase of a voltage at a parallel connection point. When the voltage amplitude of the alternating current output by the power conversion circuit is greater than or equal to the first fixed voltage, the voltage amplitude of the alternating current output by the power conversion circuit is controlled to be increased to a startup voltage of the power converter at the second rate, to complete black start of the power converter, where the second rate is greater than the first rate. Specifically, a voltage amplitude by which the alternating current output by the power conversion circuit is increased after each voltage period may be controlled to be equal to a second step, until black start of the power converter is completed. At an initial stage of black start, the voltage amplitude of the alternating current is controlled to be increased at the first rate, to maintain, when a voltage amplitude difference occurs between the alternating current end of the power converter and another device due to a reason such as inconsistent moments at which all power converters receive the black start instruction, a voltage difference between the alternating current ends of the power converters and the another device to be less than a voltage threshold, so as to reduce a circulating current among devices connected in parallel in a black start establishment process of the power converter. In addition, after the voltage amplitude of the alternating current output by the power conversion circuit is increased to be greater than or equal to the first fixed voltage, that is, at a later stage of black start, an increase rate of the voltage amplitude of the alternating current is increased, so that the power converter completes black start within a fixed time interval. This implements multi-device parallel connection for synchronous black start without increasing additional hardware costs or changing a communication mode, and suppresses a circulating current among devices connected in parallel caused by a communication delay at the initial stage of black start, thereby improving reliability of black start of the power supply system.

In some feasible implementations, the first fixed voltage may be equal to a half of the startup voltage of the power converter or a voltage within a value range corresponding to the half of the startup voltage of the power converter, and the startup voltage of the power converter is a voltage output by the alternating current end after black start of the power converter is completed. For example, when the startup voltage of the power converter is 220 V, the first fixed voltage is set to 110 V. In this case, during synchronous black start of the power converters, when the voltage amplitude of the alternating current output by the power conversion circuit is less than 110 V, the voltage amplitude of the alternating current output by the power conversion circuit is controlled to be increased at the first rate; or when the voltage amplitude of the alternating current output by the power conversion circuit is greater than or equal to 110 V, the increase rate of the voltage amplitude of the alternating current output by the power conversion circuit is increased for one or more times, and the voltage amplitude of the alternating current output by the power conversion circuit is controlled to be increased at an updated increase rate, until the voltage amplitude of the alternating current output by the power conversion circuit reaches the startup voltage 220 V of the power converter, that is, black start of the power converter is completed. It may be understood that, when the startup voltage of the power converter is 220 V, the first fixed voltage may be alternatively set to any voltage within a value range corresponding to 110 V, for example, a value range from 105 V to 115 V. This may be specifically determined based on an actual application scenario, and is not limited herein. Herein, the first fixed voltage may be set to be equal to the half of the startup voltage of the power converter or the voltage within the value range corresponding to the half of the startup voltage of the power converter, so that the voltage amplitude of the alternating current output by the power conversion circuit in the power converter is increased at the lower first rate before reaching the half of the startup voltage of the power converter. This achieves better control effect on the circulating current among devices connected in parallel in a half black start process, and avoids excessively long black start time caused by increasing the voltage at the lower first rate for a long time, thereby ensuring operating efficiency of the power converter.

S704: Determine whether the voltage amplitude of the alternating current output by the power conversion circuit is equal to the startup voltage of the power converter; and if the voltage amplitude is equal to the startup voltage, perform step S705, or if the voltage amplitude is not equal to the startup voltage, perform step S703.

S705: Complete black start.

In some feasible implementations, when the voltage amplitude of the alternating current output by the power conversion circuit is less than a second fixed voltage, a current amplitude of the alternating current output by the power conversion circuit is controlled not to exceed a current threshold, where the second fixed voltage is greater than the first fixed voltage and less than the startup voltage of the power converter. The current threshold may be K*IN, where K is a current-limiting ratio, and IN is a rated current. For example, the current threshold may be 5% IN. Herein, before the second fixed voltage is reached, the current amplitude of the alternating current output by the power conversion circuit is controlled not to exceed the current threshold, so that a circulating current among devices connected in parallel caused by a voltage sampling deviation of each power converter can be suppressed, and the circulating current among devices connected in parallel caused by the communication delay at the initial stage of black start can be further suppressed. Optionally, a current threshold is positively correlated with power output by a plurality of power converters to the load. To be specific, when the plurality of power converters in the power supply system are connected to more loads and output higher power to the loads, a larger current threshold is set, to meet a requirement of higher load power.

In some feasible implementations, after the voltage amplitude of the alternating current output by the power conversion circuit is controlled to be increased at the second rate, and before black start is completed, the increase rate of the voltage amplitude of the alternating current is controlled to continue to be increased for one or more times, until black start of the power converter is completed. For a specific process of increasing the increase rate of the voltage amplitude of the alternating current for a plurality of times during black start, refer to the description of FIG. 5. Details are not described herein again. After the voltage amplitude of the alternating current output by the power conversion circuit is increased to be greater than or equal to the first fixed voltage, that is, at the later stage of black start, the first rate is sequentially controlled to be increased to rates such as the second rate and a third rate, so that time for the power converter to complete black start is not excessively long. This implements multi-device parallel connection for synchronous black start without increasing additional hardware costs or changing a communication mode, and suppresses the circulating current among devices connected in parallel caused by the communication delay at the initial stage of black start, thereby improving reliability of black start of the power supply system.

## Claims

1. A power converter, wherein a direct current end of the power converter is configured to connect to a photovoltaic module or an energy storage battery, an alternating current end of the power converter is configured to connect to a load or a power grid, the power converter comprises a power conversion circuit and a controller, and the power conversion circuit is configured to convert a direct current into an alternating current; and
the controller is configured to: during black start of the power converter, first control a voltage amplitude of the alternating current output by the power conversion circuit to be increased at a first rate, and then control the voltage amplitude of the alternating current output by the power conversion circuit to be increased at a second rate, wherein the second rate is greater than the first rate.

2. The power converter according to claim 1, wherein the controller is further configured to: first control the voltage amplitude of the alternating current output by the power conversion circuit to be increased to a first fixed voltage at the first rate, and then control the voltage amplitude of the alternating current output by the power conversion circuit to be increased to a startup voltage of the power converter at the second rate, to complete black start of the power converter.

3. The power converter according to claim 2, wherein the controller is further configured to: when the voltage amplitude of the alternating current output by the power conversion circuit is less than a second fixed voltage, control a current amplitude of the alternating current output by the power conversion circuit not to exceed a current threshold, wherein the second fixed voltage is greater than the first fixed voltage.

4. The power converter according to claim 1, wherein the controller is further configured to: after controlling the voltage amplitude of the alternating current output by the power conversion circuit to be increased at the second rate, control an increase rate of the voltage amplitude of the alternating current to continue to be increased for one or more times, until the voltage amplitude of the alternating current output by the power conversion circuit reaches a startup voltage of the power converter, to complete black start of the power converter.

5. A power supply system, wherein the power supply system comprises an upper-level controller and a plurality of power converters, a direct current end of the power converter is configured to connect to a photovoltaic module or an energy storage battery, alternating current ends of the plurality of power converters are connected in parallel and then are configured to connect to a load or a power grid, the power converter comprises a power conversion circuit and a controller, the power conversion circuit is configured to convert a direct current into an alternating current, and the upper-level controller is configured to send a black start instruction to the plurality of power converters; and
the controller is further configured to: during black start of the power converter, first control a voltage amplitude of the alternating current output by the power conversion circuit to be increased at a first rate, and then control the voltage amplitude of the alternating current output by the power conversion circuit to be increased at a second rate, wherein the second rate is greater than the first rate, to reduce a circulating current between the plurality of power converters.

6. The power supply system according to claim 5, wherein a voltage difference between the alternating current ends of the plurality of power converters is less than a voltage threshold in the process in which the controller controls the voltage amplitude of the alternating current output by the power conversion circuit to be increased at the first rate.

7. The power supply system according to claim 5 or 6, wherein phases of alternating currents output by the power conversion circuits in the plurality of power converters are equal in the process in which the voltage amplitude of the alternating current output by the power conversion circuit is increased at the first rate.

8. The power supply system according to any one of claims 5 to 7, wherein the controller is further configured to: first control the voltage amplitude of the alternating current output by the power conversion circuit to be increased to a first fixed voltage at the first rate, and then control the voltage amplitude of the alternating current output by the power conversion circuit to be increased to a startup voltage of the power converter at the second rate, to complete black start of the power converter.

9. The power supply system according to claim 8, wherein the controller is further configured to: when the voltage amplitude of the alternating current output by the power conversion circuit is less than a second fixed voltage, control a current amplitude of the alternating current output by the power conversion circuit not to exceed a current threshold, wherein the second fixed voltage is greater than the first fixed voltage.

10. The power supply system according to any one of claims 5 to 9, wherein the controller is further configured to: after controlling the voltage amplitude of the alternating current output by the power conversion circuit to be increased at the second rate, control an increase rate of the voltage amplitude of the alternating current to continue to be increased for one or more times, until the voltage amplitude of the alternating current output by the power conversion circuit reaches the startup voltage of the power converter, to complete black start of the power converter.

11. A black start method for a power converter, wherein the method comprises:
during black start of the power converter, first controlling a voltage amplitude of an alternating current output by a power conversion circuit in the power converter to be increased at a first rate; and
then controlling the voltage amplitude of the alternating current output by the power conversion circuit to be increased at a second rate, wherein the second rate is greater than the first rate, to reduce a circulating current between the power converter and another power converter, a direct current end of the power converter is configured to connect to a photovoltaic module or an energy storage battery, and an alternating current end of the power converter is configured to connect to a load or a power grid.

12. The method according to claim 11, wherein the method comprises:
first controlling the voltage amplitude of the alternating current output by the power conversion circuit to be increased to a first fixed voltage at the first rate; and
then controlling the voltage amplitude of the alternating current output by the power conversion circuit to be increased to a startup voltage of the power converter at the second rate, to complete black start of the power converter.

13. The method according to claim 12, comprising: when the voltage amplitude of the alternating current output by the power conversion circuit is less than a second fixed voltage, controlling a current amplitude of the alternating current output by the power conversion circuit not to exceed a current threshold, wherein the second fixed voltage is greater than the first fixed voltage.
